Europäisches Patentamt

European Patent Office

Office européen des brevets

(19)

(11) **EP 1 198 378 B1**

(12) **EUROPÄISCHE PATENTSCHRIFT**

(45) Veröffentlichungstag und Bekanntmachung des Hinweises auf die Patenterteilung:
**02.03.2005 Patentblatt 2005/09**

(21) Anmeldenummer: **00949407.1**

(22) Anmeldetag: **26.07.2000**

(51) Int Cl.$^7$: **B61L 3/00**

(86) Internationale Anmeldenummer:
**PCT/EP2000/007147**

(87) Internationale Veröffentlichungsnummer:
**WO 2001/008955 (08.02.2001 Gazette 2001/06)**

(54) **VERFAHREN ZUR ENERGIEOPTIMIERUNG DER FAHRWEISE BEI EINEM FAHRZEUG/ZUG UNTER VERWENDUNG DER KINETISCHEN ENERGIE**

METHOD FOR OPTIMIZING ENERGY IN THE MANNER IN WHICH A VEHICLE OR TRAIN IS DRIVEN USING KINETIC ENERGY

PROCEDE SERVANT A OPTIMISER LA CONSOMMATION D'ENERGIE POUR UN CERTAIN MODE DE FONCTIONNEMENT D'UN VEHICULE/TRAIN, EN FAISANT APPEL A L'ENERGIE CINETIQUE

(84) Benannte Vertragsstaaten:
**AT BE CH CY DE DK ES FI FR GB GR IE IT LI LU MC NL PT SE**

(30) Priorität: **29.07.1999 DE 19935349**

(43) Veröffentlichungstag der Anmeldung:
**24.04.2002 Patentblatt 2002/17**

(73) Patentinhaber: **Bombardier Transportation GmbH 13627 Berlin (DE)**

(72) Erfinder:
- **FRANKE, Rüdiger**
  **D-69121 Heidelberg (DE)**
- **TERWIESCH, Peter**
  **CH-5512 Wohlenschwiel (CH)**
- **MEYER, Markus**
  **CH-6030 Ebikon (CH)**
- **KLOSE, Christian**
  **D-14774 Brandenburg a.d. Havel (DE)**
- **KETTELER, Karl-Hermann**
  **CH-5314 Kleindöltingen (CH)**

(74) Vertreter: **Akers, Noel James et al Howrey Simon Arnold & White, City Point, One Ropemaker Street London EC2Y 9HS (GB)**

(56) Entgegenhaltungen:
**DD-A- 129 761        DD-A- 208 324
DD-A- 236 705        DD-A- 262 836
DD-A- 266 539**

**Beschreibung**

Die Erfindung bezieht sich auf ein Verfahren zur Energieoptimierung der Fahrweise bei einem Fahrzeug/Zug gemäss dem Oberbegriff des Anspruchs 1.

Bei der Erstellung von Fahrplänen für den Schienenverkehr werden Zeitreserven für unvorhergesehene Ereignisse und widrige Betriebsbedingungen eingeplant. Da während realer Fahrten die Betriebsbedingungen typischerweise günstiger sind als in der Planung angenommen, werden die dabei entstehenden Zeitreserven für andere Zwecke verfügbar. Eine besonders sinnvolle Benutzung der Zeitreserven besteht in der Einsparung von Energie mittels geeigneter Fahrweise des Fahrzeuges/Zuges.

Aus der DE 30 26 652 A1, der DD 255 132 A1 und der EP 0 467 377 B1 sind in diesem Zusammenhang Verfahren bekannt, wie man ein Fahrzeug energieoptimal zwischen zwei Haltepunkten bewegt. Bei langen Strecken wird eine Unterteilung in mehrere Abschnitte vorgeschlagen, wobei in jedem Abschnitt eine optimale Teillösung ermittelt wird und die Gesamtlösung sich aus der Zusammensetzung der Teillösungen ergibt.

Die DE 30 26 652 A1 und die EP 0 467 377 B1 beschäftigen sich mit einer Systemstruktur, in der Verfahren zur Energieminimierung realisiert werden können, wobei eine Gesamtstrecke zwischen zwei Haltepunkten (Haltebahnhöfen) berücksichtigt wird.

Bei der DD129761 wird ein Verfahren zur realisierung einer energiesparendern Zugsteuerung beschrieben, durch Anwahl von zeitfesten oder zeitvariablen Fahrprogrammen für die Vorgabe optimaler Umschalt handlungen zwischen den Fahrregimen Anfahrt, konstante Geschwindigkeit, Auslauf und bremsen.

Die bisher bekannten Verfahren basieren auf einem Fahrzeugmodell, das die Geschwindigkeit des Fahrzeuges als wesentliche Variable enthält. Modelle zur Beschreibung der Geschwindigkeitsänderung über dem Weg sind jedoch in nachteiliger Weise stark nichtlinear. Die Anwendung eines iterativ arbeitenden numerischen Algorithmus zur Lösung der impliziten nichtlinearen Gleichungen ist insbesondere in Echtzeitanwendung kritisch. Es ist keine explizite analytische Lösung bekannt.

Der Erfindung liegt die Aufgabe zugrunde, ein verbessertes Verfahren zur Energieoptimierung der Fahrweise bei einem Fahrzeug/Zug mit in mehrere Abschnitte unterteilter Gesamtstrecke anzugeben.

Diese Aufgabe wird in Verbindung mit dem Oberbegriff durch die im den Anspruch 1 angegebenen Merkmale gelöst.

Die mit der Erfindung erzielbaren Vorteile bestehen insbesondere darin, daß durch Heranziehen der Bewegungsgleichung für die kinetische Energie des Fahrzeuges beim Fahrzeugmodell die Optimierungsrechnung vereinfacht wird. Die Verwendung einer expliziten analytischen Lösung der Bewegungsgleichung für die kinetische Energie des Fahrzeuges erlaubt eine Vorabbestimmung des nötigen Rechenaufwandes, was insbesondere für die Anwendung unter Echtzeitbedingungen wichtig ist.

Vorteilhafte Ausgestaltungen der Erfindung sind in.den Unteransprüchen gekennzeichnet.

Weitere Vorteile des vorgeschlagenen Verfahrens ergeben sich aus der nachstehenden Beschreibung.

Die Erfindung wird nachstehend näher erläutert.

Das wesentliche der Erfindung ist darin zu sehen, daß zur Berechnung der optimalen Fahrweise beim Fahrzeugmodell bzw. Differentialgleichungs-Modell an Stelle der Geschwindigkeit des Fahrzeuges die Bewegungsgleichung für die kinetische Energie des Fahrzeuges betrachtet wird, d. h. es werden die kinetische Energie $E_{kin}$ des Fahrzeuges und die Zeit t als Zustandsgrößen verwendet. Hierdurch ist die analytische Lösung der Bewegungsgleichung möglich, womit das Optimierungsverfahren beträchtlich vereinfacht wird.

Es werden die Änderungen der Zustandsgrößen bezüglich des Weges s betrachtet. Das Differentialgleichungs-Modell hat die Form:

$$\frac{de_{kin}}{ds} = A - B\sqrt{e_{kin}} - C \cdot e_{kin}, \; e_{kin}(0) = e_0,$$

$$\frac{dt}{ds} = D\sqrt{\frac{1}{e_{kin}}}, \; t(0) = t_0, \; \text{mit } D = \frac{\sqrt{2}}{2}.$$

Der Term A beinhaltet die vom Antriebssystem aufgebrachte Traktionskraft (Beschleunigung und Bremsung), den Streckenwiderstand und konstante Anteile des Fahrwiderstandes. Der Terme B und C beschreiben geschwindigkeitsabhängige Teile des Fahrwiderstandes, insbesondere beschreibt C den Luftwiderstand und B den Laufwerksbeiwert für Störbewegungen. Die Variable $e_{kin}$ beschreibt die auf die Fahrzeugmasse m (Zugmasse) normierte spezifische kinetische Energie des Fahrzeuges/Zuges:

$$e_{kin} = \frac{1}{m \cdot \rho} E_{kin} = \frac{1}{2} v^2,$$

wobei $\rho$ ein Zuschlagfaktor für rotierende Massen und v die Geschwindigkeit des Fahrzeuges sind.

Für die Optimierung wird die betrachtete Strecke in mehrere Stufen zerlegt, so daß in jeder Stufe die Maximalgeschwindigkeit und die Terme A und C konstant angenommen werden können. Der Term B wird approximativ mit in die Terme C und A einbezogen, so daß B=0 gilt. Für jede Stufe wird nun folgende analytische Lösung der angegebenen Differentialgleichungen zur Berechnung der Änderung der kinetischen Energie und des Zeitverbrauchs $\Delta t$ verwendet:

$$e_{kin}(s) = \frac{A}{C} + \left( e_{kin}(0) - \frac{A}{C} \right) \cdot \exp(-C \cdot s),$$

$$t(s) = t(0) + \Delta t(s),$$

wobei
für A>0 und $C / A \cdot e_{kin}(0) = 1$ (konstante Geschwindigkeit) gilt:

$$\Delta t(s) = \frac{D \cdot s}{\sqrt{e_{kin}(0)}},$$

für A>0 und $C / A \cdot e_{kin}(0) \neq 1$ gilt:

$$\Delta t(s) = \frac{2D}{\sqrt{A \cdot C}} \, ar \tanh\left( \frac{x - y}{1 - x \cdot y} \right),$$

$$x = \sqrt{1 + \left( \frac{C}{A} e_{kin}(0) - 1 \right) \exp(-C \cdot s)}, \quad y = \sqrt{\frac{C}{A} e_{kin}(0)},$$

für

$$\frac{-C \cdot e_{kin}(0)}{[\exp(C \cdot s) - 1]} < A < 0$$

gilt:

$$\Delta t(s) = \frac{2D}{\sqrt{-A \cdot C}} \arctan\left( \frac{y - x}{1 + x \cdot y} \right),$$

$$x = \sqrt{-\left( 1 + \left( \frac{C}{A} e_{kin}(0) - 1 \right) \exp(-C \cdot s) \right)}, \quad y = \sqrt{-\frac{C}{A} e_{kin}(0)},$$

für A=0 gilt:

$$\Delta t(s) = \frac{2D}{C\sqrt{e_{kin}(0)}}\left[\exp\left(\frac{C}{2}s\right) - 1\right].$$

Das Optimierungsproblem wird demnach als Mehrstufenproblem formuliert und mit einem geeigneten Optimierungsalgorithmus gelöst. Geeignete Optimierungsalgorithmen sind beispielsweise die "Dynamische Programmierung" nach Bellman oder Überführung in und Lösung als nichtlineares Optimierungsproblem. Die Algorithmen sind z. B. aus Papageorgiou: Optimierung, Kapitel 10, 19 und insbes. 20, Oldenbourg Verlag, 1996 bekannt.

Bezugszeichenliste

| A | vom Antriebssystem aufgebrachte Traktionskraft (Beschleunigung und Bremsung), Streckenwiderstand und konstante Anteile des Fahrwiderstandes |
|---|---|
| B | geschwindigkeitsabhängiger Teil des Fahrwiderstandes (Laufwerksbeiwert für Störbewegungen)C geschwindigkeitsabhängiger Teil des Fahrwiderstandes |
| | (Luftwiderstand) |
| D | $\sqrt{2}/2$ |
| $E_{kin}$ | kinetische Energie des Fahrzeuges/Zuges |
| $e_{kin}$ | auf die Fahrzeugmasse normierte spezifische kinetische Energie des Fahrzeuges/Zuges |
| $e_0$ | Anfangswert von $e_{kin}$ |
| m | Fahrzeugmasse |
| s | Weg |
| t | Zeit |
| $t_0$ | Anfangswert der Zeit t |
| $\Delta t$ | Zeitverbrauch |
| v | Geschwindigkeit des Fahrzeuges/Zuges |
| $\rho$ | Zuschlagfaktor für rotierende Massen |

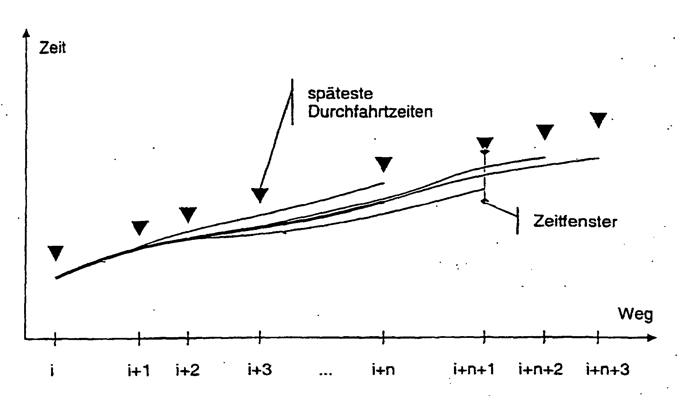

**Patentansprüche**

**1.** Verfahren zur Energieoptimierung bei einem Fahrzeug/Zug unter Nutzung der in einem Fahrplan eingeplanten Zeitreserven, wobei zur Erzielung einer energiesparenden Fahrweise unter Zuhilfenahme eines Optimierungsalgorithmus die kinetische Energie des Fahrzeuges und die Zeit als Zustandsgrößen in einem Fahrzeugmodell verwendet und die Änderungen der Zustandsgrößen bezüglich des Weges durch Heranziehen der expliziten analytischen Lösung der Bewegungsgleichung für die kinetische Energie des Fahrzeuges beim Fahrzeugmodell betrachtet werden

**dadurch gekennzeichnet, dass** für die Optimierung das folgende Differentialgleichungsmodell zugrunde gelegt wird:

$$\frac{de_{kin}}{ds} = A - B\sqrt{e_{kin}} - C \cdot e_{kin}, \ e_{kin}(0) = e_0,$$

$$\frac{dt}{ds} = D\sqrt{\frac{1}{e_{kin}}}, \ t(0) = t_0, \text{ mit } D = \frac{\sqrt{2}}{2},$$

wobei

$$e_{kin} = \frac{1}{m \cdot \rho}E_{kin} = \frac{1}{2}v^2,$$

mit

EP 1 198 378 B1

$E_{kin}$     kinetische Energie des Fahrzeuges

$e_{kin}$     auf die Fahrzeugmasse normierte spezifische kinetische Energie des Fahrzeuges/Zuges

$e_0$     Anfangswert von $e_{kin}$

A     vom Antriebssystem aufgebrachte Traktionskraft z.B Beschleunigung und Bremsung, Streckenwiderstand und konstante Anteile des Fahrwiderstandes

B     geschwindigkeitsabhängiger Teil des Fahrwiderstandes z.B. Laufwerksbeiwert für Störbewegungen

C     geschwindigkeitsabhängiger Teil des Fahrwiderstandes z.B Luftwiderstand

m     Fahrzeugmasse

s     Weg

t     Zeit

$t_0$     Anfangswert der Zeit t

v     Geschwindigkeit des Fahrzeuges

ρ     Zuschlagfaktor für rotierende Massen

und dass für die Optimierung die betrachtete Strecke in mehrere Abschnitte zerlegt wird, so dass in jedem Abschnitt die Maximalgeschwindigkeit und die Terme A und C als konstant angenommen werden können, und der Term B approximativ mit in die Terme C und A einbezogen wird, so dass B = 0 gilt, so dass für jede Stufe folgendes Differentialgleichungsmodell zugrunde gelegt wird:

$$\frac{de_{kin}}{ds} = A - C \cdot e_{kin}.$$

**2.** Verfahren nach Anspruch 1, **dadurch gekennzeichnet, dass** für jede Stufe der Strecke folgende analytische Lösung verwendet wird:

$$e_{kin}(s) = \frac{A}{C} + \left( e_{kin}(0) - \frac{A}{C} \right) \cdot \exp(-C \cdot s),$$

$$t(s) = t(0) + \Delta t(s),$$

wobei für A>0 und $C/A - e_{kin}(0) = 1$ gilt:

$$\Delta t(s) = \frac{Ds}{\sqrt{e(0)}},$$

für A>0 und $C/A \cdot e_{kin}(0) \neq 1$ gilt:

$$\Delta t(s) = \frac{2D}{\sqrt{AC}} \, ar \tanh\left( \frac{x-y}{1-xy} \right),$$

$$x = \sqrt{1 + \left( \frac{C}{A} e_{kin}(0) - 1 \right) \exp(-Cs)}, \quad y = \sqrt{\frac{C}{A} e_{kin}(0)},$$

für

$$\frac{-C \cdot e_{kin}(0)}{[\exp(C \cdot s) - 1]} < A < 0$$

gilt:

$$\Delta t(s) = \frac{2D}{\sqrt{-AC}} \arctan\left(\frac{y-x}{1+xy}\right),$$

$$x = \sqrt{-\left(1 + \left(\frac{C}{A} e_{kin}(0) - 1\right) \exp(-Cs)\right)}, \quad y = \sqrt{-\frac{C}{A} e_{kin}(0)},$$

für A=0 gilt:

$$\Delta t(s) = \frac{2D}{C\sqrt{e(0)}}\left[\exp\left(\frac{C}{2}s\right) - 1\right].$$

mit

Δt    Zeitverbrauch.

## Claims

1. A method for power optimization in a vehicle/train by the use of time reserves included in a schedule, whereby in order to achieve an energy-saving travel mode using an optimization algorithm, the kinetic energy of the vehicle and time are used as state variables in a vehicle model and changes in the state variables with respect to distance travelled over the route are taken into consideration by use of the explicit analytical solution to the equation of motion for the kinetic energy of the vehicle in the vehicle model, **characterised in that** for the optimisation the following differential equation model is used as a basis:

$$\frac{de_{kin}}{ds} = A - B\sqrt{e_{kin}} - C \cdot e_{kin}, \ e_{kin}(0) = e_0,$$

$$\frac{dt}{ds} = D\sqrt{\frac{1}{e_{kin}}}, \text{ with } D = \frac{\sqrt{2}}{2},$$

where

$$e_{kin} = \frac{1}{m \cdot \rho} E_{kin} = \frac{1}{2}v^2,$$

with:

$E_{kin}$    kinetic energy of the vehicle
$e_{kin}$    specific kinetic energy of the vehicle normalised to the vehicle mass
A    tractive force e.g. acceleration and braking applied by a drive system of the vehicle, route resistance and constant components of the travel resistance
B    a speed-dependent part of the travel resistance e.g. running-gear coefficient for interfering movements
C    a speed-dependent part of the travel resistance e.g. air resistance
$m$    mass of the vehicle
$s$    distance

$t$       time

$t_0$       initial value of the time $t$

$v$       speed of the vehicle

$\rho$       an additional factor for rotating masses

and that for the optimisation, the route under consideration is divided into a plurality of sections, so that for each section a maximum speed and the terms A and C are assumed to be constant, and the term B is approximately included in the terms C and A, such that B = 0 is valid, so that for each section the following differential equation model is used as a basis:

$$\frac{de_{kin}}{ds} = A - C \cdot e_{kin}$$

2.    The method according to claim 1, **characterised in that** for every step of the route, the following analytical solution is used:

$$e_{kin}(s) = \frac{A}{C} + \left( e_{kin}(0) - \frac{A}{C} \right) \cdot \exp(-C \cdot s) \, ,$$

$$t(s) = t(0) + \Delta t(s),$$

where for A > 0 and C/A $\cdot$ $e_{kin}(0) = 1$ it is true that:

$$\Delta t(s) = \frac{Ds}{\sqrt{e(0)}},$$

for A > 0 and C/A $\cdot$ $e_{kin}(0) \neq 1$ it is true that:

$$\Delta t(s) = \frac{2D}{\sqrt{AC}} \, \text{artanh} \left( \frac{x-y}{1-xy} \right),$$

$$x = \sqrt{1 + \left( \frac{C}{A} e_{kin}(0) - 1 \right) \exp(-Cs)} \, , \quad y = \sqrt{\frac{C}{A} e_{kin}(0)} \, ,$$

for

$$\frac{-C \cdot e_{kin}(0)}{[\exp(C \cdot s)-1]} < A < 0$$

it is true that:

$$\Delta t(s) = \frac{2D}{\sqrt{-AC}} \arctan\left(\frac{y-x}{1-xy}\right),$$

$$x = \sqrt{-\left(1+\left(\frac{C}{A}e_{kin}(0)-1\right)\exp(-Cs)\right)}, \quad y = \sqrt{-\frac{C}{A}e_{kin}(0)},$$

for A = 0 it is true that:

$$\Delta t(s) = \frac{2D}{C\sqrt{e(o)}}\left[\exp\left(\frac{C}{2}s\right)-1\right],$$

With

$\Delta t$     time elapsed.

**Revendications**

1. Procédure pour l'optimisation de l'énergie d'un véhicule/train utilisant de réserves de temps planifiées selon un horaire, dans laquelle, pour obtenir un fonctionnement qui économise l'énergie à l'aide d'un algorithme d'optimisation, on utilise l'énergie cinétique du véhicule et le temps comme grandeurs d'état dans un modèle de véhicule, les variations des grandeurs d'état par rapport au trajet étant obtenues en dégageant la solution analytique explicite de l'équation de mouvement pour l'énergie cinétique du véhicule dans le modèle du véhicule, **caractérisée en ce que**, pour l'optimisation, on prend pour base le suivant modèle d'équation différentielle:

$$\frac{de_{kin}}{ds} = A - B\sqrt{e_{kin}} - C\cdot e_{kin},\ e_{kin}(0)=e_0,$$

$$\frac{dt}{ds} = D\sqrt{\frac{1}{e_{kin}}},\ t(0)=t_0,\ \text{avec } D = \frac{\sqrt{2}}{2},$$

où

$$e_{kin} = \frac{1}{m\cdot\rho}E_{kin} = \frac{1}{2}v^2,$$

avec :

$E_{kin}$     énergie cinétique du véhicule
$e_{kin}$     énergie cinétique spécifique du véhicule/train normalisée sur la masse du véhicule
$e_0$     valeur de départ de $e_{kin}$
A     force de traction appliquée par le système d'actionnement, par exemple, accélération et freinage, résistance à l'étirement et fractions constantes de la résistance à la progression
B     partie de la résistance à la progression qui dépend de la vitesse, par exemple, facteur de correction du mécanisme de translation pour les mouvements perturbateurs
C     partie de la résistance à la progression qui dépend de la vitesse, par exemple, résistance à l'air
m     masse du véhicule

s trajet

t temps

$t_0$ valeur de départ du temps t

v vitesse du véhicule

ρ facteur additionnel pour masses rotatives

et **en ce que**, pour l'optimisation, le trajet considéré se divise en plusieurs sections, de sorte que dans chaque section on peut prendre comme valeurs constantes la vitesse maximale et les termes A et C, le terme B étant relié de façon approximative aux termes C et A, de sorte que B=0 est une équation correcte, de telle façon que pour chacun des sections on prend pour base le suivant modèle de vitesse différentielle :

$$\frac{de_{kin}}{ds} = A - C \cdot e_{kin}.$$

2. Procédure selon la revendication 1, **caractérisée en ce que** pour chacun des niveaux du trajet on utilise la suivante solution analytique :

$$e_{kin}(s) = \frac{A}{C} + \left( e_{kin}(0) - \frac{A}{C} \right) \cdot \exp(-C \cdot s),$$

$$t(s) = t(0) + \Delta t(s).$$

Où pour A > 0 et $C / A \cdot e_{kin}(0) = 1$ l'équation correcte est:

$$\Delta t(s) = \frac{Ds}{\sqrt{e(0)}},$$

Pour A>0 et $C/A \cdot e_{kin}(0) \neq 1$ l'équation correcte est:

$$\Delta t(s) = \frac{2D}{\sqrt{AC}} \, ar \tanh\left( \frac{x - y}{1 - xy} \right),$$

$$x = \sqrt{1 + \left( \frac{C}{A} e_{kin}(0) - 1 \right) \exp(-Cs)}, \quad y = \sqrt{\frac{C}{A} e_{kin}(0)},$$

Pour

$$\frac{-C \cdot e_{kin}(0)}{[\exp(C \cdot s)-1]} < A < 0$$

l'èquation correcte est:

$$\Delta t(s) = \frac{2D}{\sqrt{-AC}} \arctan\left( \frac{y - x}{1 + xy} \right),$$

$$x = \sqrt{-\left(1 + \left(\frac{C}{A}e_{kin}(0) - 1\right)\exp(-Cs)\right)}, \quad y = \sqrt{-\frac{C}{A}e_{kin}(0)},$$

Pour A = 0 l'èquation correcte est:

$$\Delta t(s) = \frac{2D}{C\sqrt{e(0)}}\left[\exp\left(\frac{C}{2}s\right) - 1\right].$$

Avec

Δt    Temps utilisé